# EUROPEAN PATENT APPLICATION

(11) **EP 0 893 813 A2**
(43) Date of publication of application: **27.01.1999**
(21) Application number: 98111846.6
(22) Date of filing: 26.06.1998
(51) Int. Cl.: H01J 9/24, H01J 17/16, H01J 17/49

(54) **Composite and method for forming plasma display apparatus barrier rib**

(30) Priority: 25.07.1997 US 900265
(71) Applicant: E.I. DUPONT DE NEMOURS AND COMPANY, Wilmington, Delaware 19898 (US)
(72) Inventor: Wang, Carl Baasun, Chapel Hill, North Carolina 27514 (US); Hang, Kenneth Warren, West Chester, Pennsylvania 19382 (US); Tang, Bonnie Ying, East Brunswick, New Jersey 08816 (US)
(74) Representative: Butler, Michael John

(57) **Abstract**

A composite comprising an upper and lower layer for use in the formation of a green tape comprising inorganic powders composed of non-crystallizable glass, refractory oxide, and/or refractory pigment in a volatile organic solvent mixture with a binder composed of a polymer substance and plasticizer(s). A green tape obtained by coating said composite over a flexible substrate, and heating, drying, and laminating this product; and a method for forming a barrier rib for a plasma display apparatus by sand blasting using said green tape as an insulator layer for the barrier rib formation. A use of a pre-formed green tape of uniform thickness and specified color in the formation of the barrier rib of a plasma display apparatus allows the thickness uniformity of the barrier rib to be improved, the insulator deposition process to be simplified and the work rationalized, which means that the plasma display apparatus can be made larger and with higher resolution, and mass production throughput will be enhanced.

## Description

### FIELD OF THE INVENTION

The present invention relates to a method for forming a plasma display apparatus (hereinafter referred to as "PDP apparatus"), by utilizing a composite comprising an upper and lower layer composition for use in the formation of a green tape for barrier rib formation in the PDP apparatus.

### BACKGROUND OF THE INVENTION

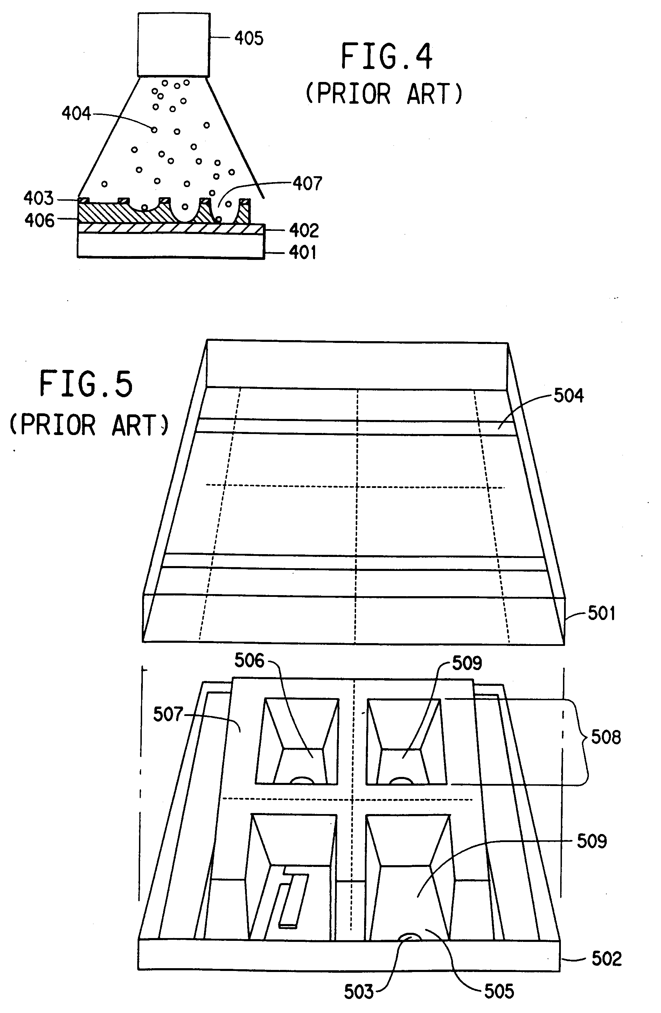

Much progress has been made in the development of PDP apparatus that serve as flat panel displays in large, wall-mount television and high-definition television displays which are used in place of conventional CRTs. In the direct current (DC) PDP apparatus of Figure 5, a pair of glass substrates (501 and 502) having a plurality of anodes (503) and cathodes (504) positioned perpendicular, the anodes are covered with an insulator layer (505) as needed on the inner surface of the substrate (502) and the anodes (503) and cathodes (504) are positioned facing each other to maintain a specific gas discharge distance, the cell (508) is then coated with a phosphor material (506) chosen from blue, green and red and the edges thereof are sealed airtight with a sealing material, after which the above-mentioned gas discharge area is filled with a specific discharge gas (509) to create a gas discharge section. A structure is employed whereby the above-mentioned gas discharge distance is kept identical and discharge occurs in a specific cell partitioned by an insulator barrier-rib (507).

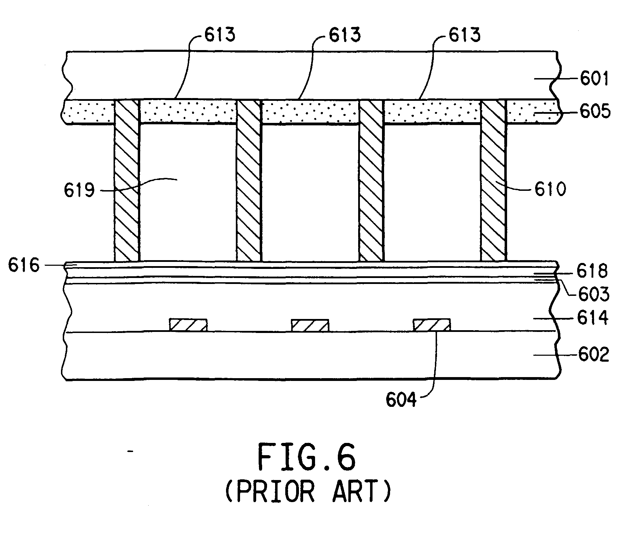

Figure 6 shows an alternating current (AC) PDP apparatus (prior art) related to the present invention which comprises first and second glass substrates 601, 602, a plurality of X electrodes 603 (first electrodes) laterally extending on the inner surface of the second or rear substrate 602, a plurality of Y electrodes 604 (second electrodes) longitudinally extending on the inner surface of the second substrate 602, and a plurality of phosphor materials 605 on substrate 601 for converting discharge ultraviolet light into visible light. The PDP apparatus also comprises a comb shape ridge 610 built on substrate 602 which defines a plurality of pixel areas and is adapted to provide a partition wall for maintaining the spacing between the first and the second substrates 601, 602. Each of the (line) X electrodes 603 is disposed on dielectric layer 614 to electrically insulated from the (column) Y electrodes 604, and another dielectric layer 618 is arranged over the line electrodes 603 to separate from a discharge space 619. Protective layer 616 may be provided on dielectric layer 618. Each of the phosphor materials 605 is formed by depositing a luminescence color phosphor material into each of the isolated location 613 on the front substrate 601. The phosphor material may be (Zn,Mn)₂SiO₄ or BaAl₁₂O₁₉:Mn for green color; (Y,Gd,Eu)BO₃ or (Y,Eu)₂O₃ for red color; or (Ba,Eu)MgAl₁₀O₁₇ for blue color.

PDP apparatus are being made larger and more precise and converted to color Therefore, a need for a more uniform barrier-rib height. i.e., electrode spacing is required. At the same time, there is a need for cost effective manufacturing of the apparatus.

Screen printing is the most commonly used method for forming the barrier-ribs used in a PDP apparatus. As discussed in published Japanese Patent Application 58-150248, screen printing involves a step in which an insulator powder such as glass is made into a printable paste, after which lines or dots and spaces are paired and printed in layers to a specific thickness at a resolution of about 3 pairs per millimeter, for example, using a screen printing mesh mask (in the case of a small display). At least three or four layers, and at most about fifteen layers, are built up through repeated printing to a specific thickness (height) while the above-mentioned resolution is maintained. This multiple printing step therefore requires an accuracy check of position at each stage of the printing, care must be taken to avoid oozing of the paste at each stage. Furthermore, the film thickness must be precisely controlled so that the final height of the layers is uniform, all of which makes this an extremely complicated step with a low yield. An experienced printing technician has to spend a great deal of time and effort to get around the drawbacks to this step, which incurs tremendous costs.

In light of this situation, a sandblasting barrier-rib formation method has been developed and put into practical use in recent years. The method will be described while referring to Figure 4. The first step is to form an anode (402) on a glass substrate (401). The insulator layer (406) that serves as the barrier-rib is then screen-printed to the desired thickness. A photoresist (403) that is resistant to sandblasting is bonded over the dried insulator layer and patterned, an abrasive material (404) is sprayed by a sandblasting machine (405). To remove the insulator material from the region in which the resist has not been patterned (407) and the resist is then stripped away and the remaining product fired, which forms a fine barrier-rib of a uniform height.

The above-mentioned screen printing method, in which an insulator layer in the desired pattern is printed to the desired height using a paste whose principal component is an insulator powder such as glass.

Although positioning is easy with a sandblasting method because it involves solid unpatterned printing, the printing still has to be repeated a number of times, and achieving a uniform film thickness is still difficult. Furthermore, because of the need for the barrier-rib of a PDP apparatus to be reliable, this method requires careful paste preparation and printing work so as to avoid any detects in the process, and the work environment and atmosphere also must be carefully managed and improvement in work or production efficiency remains a problem in the industry.

The inventors perfected the present invention upon discovering that a reliable barrier-rib with an uniform height or thickness can be formed easily and the barrier-rib formation step can be greatly improved upon by using a pre-formed green tape of an uniform thickness for the insulator layer.

A series of composite insulator green tapes have been invented which further simplify the barrier rib fabrication process and provide a dense barrier rib microstructure suitable for both DC and AC PDP apparatus.

Prior art (allowed U.S. Serial No. 08/542,273) disclosed "a coatable insulator composition for use in the formulation of a green tape for barrier rib formation of the PDP apparatus", however, this invention produces a barrier rib structure of much higher degree of inorganic densification after post firing, hence making it more suitable for AC PDP applications.

### SUMMARY OF THE INVENTION

The present invention is directed to acomposite for use in a green tape suitable barrier rib construction in a plasma display apparatus comprising:
(a) an upper layer and a lower layer composition each comprising:
   (i) 1 to 30 vol. % of a non-crystallizable first glass;
   (ii) 10 to 40 vol.% of a non-crystallizable second glass;
   (iii) 10 to 70 vol.% of a refractory oxide;
   (iv) 0 to 10 vol.% inorganic oxidizing agent; and with a further requirement:
   (v) that the upper layer contains 1 to 30 vol.% refractory pigment and the lower layer contains 0 to 30 vol. % refractory pigment; and
   wherein (i) the second glass has a deformation temperature at least 50°C lower than the firing temperature for the composite; (ii) the first glass has a deformation temperature at least 50°C lower than the deformation temperature of the second glass; wherein the first and the second glasses have a viscosity of 1 x 10⁵ poise or less at a firing temperature in the range of 470°C to 650°C for the composite; and
   with the proviso that the combined amount of the first and second glasses are at least 30 vol. % of the total volume of the upper and lower layers;
(b) a binder comprising 40 to 60 vol.% polymer and 60 to 40 vol.% plasticizer.
(c) volatile organic solvent; and
   with the further proviso that the compositions of the upper and lower layer are not the same.

The invention is further directed to a green tape used in the formation of a barrier-rib for a plasma display apparatus, comprising the composite of the above coated over a flexible substrate, in which the volatile organic solvent is removed by heating. The upper and lower layers of the composite may also be applied as green tapes and the laminated together.

The invention is still further directed to a method for forming a plasma display barrier rib whose edges are sealed with a sealing material and which is equipped with (i) a pair of substrates which are positioned facing each other a specific distance apart, wherein a plurality of electrodes that make up a discharge light emitting display are provides to the surface of at least one of the substrates, ad (ii) a barrier rib that divides said discharge light emitting display, comprising
a) at least one layer of the green tape as described above devoid the flexible substrate is laminated over the surface of an assembly on which an electrode pattern-layer of a conductor composition has been formed on a glass substrate and is heated within the range of 350° to 470°C to form an insulator in which nearly all of the organic matter in the layer has been removed, the non-crystallizable first glass was also softened and melted to form an inorganic binder within the insulator layer,
b) a photoresist layer for use in sand blasting is formed on the insulator layer obtained in step a) and a resist pattern corresponding to the barrier rib is formed in the region that will not be etched by sand blasting,
c) a barrier rib structure component is formed by sand blasting away the insulator layer in the region with no resist pattern formed in step b), and
d) the formed barrier rib by the insulator layer patterned in step c) is post fired after the resist layer has been stripped off.

### BRIEF DESCRIPTION OF THE DRAWINGS

Fig. 1 is a schematic representing a barrier rib formation utilizing a sand blasting resist that is photoimageable and the barrier rib structure is obtained after stripping the resist.
Fig. 2 is a schematic representing a barrier rib formation utilizing a sand blasting resist that is photoimageable wherein the resist must not be stripped.
Fig. 3 is a schematic representing the assembly of a PDP apparatus.
Fig. 4 is a is a schematic representing a sand blasting barrier rib formation method.
Fig. 5 is a schematic of the internal structures of a DC PDP apparatus.
Fig. 6 is a schematic of the internal structures of a AC PDP apparatus.
Fig. 7 is a schematic representing the microstructural arrangement of the (a) as-coated "composite" green tape, (b) the green tape after first thermal treatment (at between 350°C and 470°C),(c) after sand blasting and photoresist stripping, and (d) after post firing.

### DETAILED DESCRIPTION OF THE INVENTION

The insulator "composite" of the present invention consist a pair of coatable and compatible compositions wherein each composition is obtained by dispersing an inorganic powder composed of a non-crystalline glass and a refractory oxide in a solution obtained by dissolving a binder composed of polymer(s) and plasticizer(s) in a volatile organic solvent. Coatable herein means a composition which possesses a rheology of a reasonable viscosity of about 1 to 25 pascal seconds wherein the composition is applied to a substrate. For the purpose of producing an extremely clean and defect free green tape, it is preferable to laminate a flexible substrate as a cover sheet to the dried green tape before it is wound. Depending on the adhesion differential between the green tape to base film and the green tape to cover sheet, it is possible to peel off the base film first and laminate the base film side of the green tape to a substrate of choice. Subsequently, it is equally possible to peel off the cover sheet without delaminating the green tape from the substrate of choice.

In the case of the green tape utilizing the composite, several methods can be used for its construction. One layer can be coated first, then when the second layer is being coated, the first layer can be used as the cover sheet to laminate onto the second layer. Both layers can be simultaneously coated by using a coating head that has more than one chamber that allows the materials for each layer to flow through and coated on a substrate at the same time. The layers can also be constructed by co-extrusion through a coating head with multi-slots. Moreover, all the above methods can be used when the structure requires more than two layers. Also, one layer may be applied as a green tape and the other layer coated upon.

The above demonstrates practical methods wherein the composite comprises a thin (e.g., 1-2 mils) black and a thicker (6-10 mils) white insulator layer which makes up the top and the bottom coating of the green tape. This invention, however, is not limited to such a composite formed green tape configuration.

In the tape composition of the present invention, the tapes are formulated so that they can be laminated to the substrate by using a heated and pressurized roll. These compositions require a higher level of organic content than compositions that are uniaxial press laminated as known in the art. The usual approach to formulation of tapes is to use the maximum practical amount of plasticizer to minimize the amount of matter that must be burned out in the furnace. Plasticizers can generally be volatilized before burnout, without pyrolysis of the plasticizer. In the present invention, tapes without ceramic filler need to be stripped before final firing. The usual tape composition is 30-70 vol. % binder and 35-65 vol. % inorganic.

Various chemical or physical treatments of flexible substrates such as silicon coating or electrical discharge or plasma discharge have been applied to generate the adhesion differential.

Many green tapes utilize ceramic dielectric fillers. The advantages include lower defect counts than in screen printed thick film dielectrics, thicker coatings than can be screen printed, and the ability to inspect films before they are laminated.

A typical green tape must be stripped from its backing during processing, which subjects the tape to forces that can distort the tape. The fragile tape must be accurately registered before lamination. Also, current uniaxial press laminators tend to be expensive and time consuming, when it is compared to heated roll laminator.

Several findings about composition and lamination of sand blastable tapes have been made:
i) The composition of a tape can be quite different from standard green tape, because the sand blastable tape-on-substrate (S/B TOS) never needs to support itself. It is always either supported on MYLAR® backing, MYLAR® cover sheet, or on a glass substrate. MYLAR® is a polyester film produced by E.I. du Pont de Nemours and Company, Wilmington, DE.
ii) Lesser strength is needed, a softer, more pliable tape is preferred. One that can yield and flow under pressure. This provides tape conformation to the irregular topography of the substrate and reduces the height of bumps produced by buried lines and other raised features. This property is highly desirable in fabricating a barrier-rib structure for plasma display panels.
iii) The composite and compositions thereof have a yield point because of the high solids level. This means that they will not flow until they are subjected to pressure and heat in excess of their yield point, so that they are less prone to creep when kept in a roll. Standard tapes such as commonly used photoresists are not highly filled and are more subjected to creep.

The compositions of the composite will be described in detail hereinbelow.

### AMORPHOUS AND NON-CRYSTALLINE GLASS

One important criteria of the two or more glass system found in each layer of the dual layer composite is that it is amorphous and non-crystalline under the usage conditions wherein the first glass (type I) has a deformation temperature at least 50°C. and preferably 100°C to 150°C lower than that of the second glass (type II) wherein the deformation temperature of the second glass under the influence of the first glass is at least 50°C, and preferably 100°C lower than that of the firing temperature. Dilatometer measurements can be used to derive an approximate viscosity-temperature point. The ΔL/L measurement of glassy materials as a function of temperature provides a temperature region when under the loading pressure of the contact probes sample deformation and contraction due to viscous flow are observed. It is an approximate measure of the temperature at which expansion peaks and deformation begins. It corresponds to the viscosity (η) region of log η = 12 to 14 and is therefore similar to the annealing point of glass (normally measured by glass fiber method). Both types of glasses exhibit a viscosity of 1 x 10⁵ poise or less at the firing temperature. The benefit of having type I glass is to provide the mechanical integrity of the insulator layer after a thermal treatment between 350°C ad 470°C to completely remove the organic binder materials. The type I or type II glasses may be a combination of two or more glasses which achieve the characteristics described herein. Each layer of the composition contains about 1 to 30 vol.% non-crystallizable first glass (type I) and 10 to 40 vol. % non-crystallizable second glass (type II).

When the glass system is fired at 470°C to 650°C, extremely good and complete combustion of the organic matter is possible, and the proper amount of fluidity at the peak firing temperature also allows both the compactness required of a discharge barrier rib and the strength required of a structural material to be achieved. The correlation between these two variables is required for the definition of the viscosity-temperature characteristics of the glass that can be used in this invention.

It was found that the glass system (type I and type II) should have no serious effect on the dissolution of the refractory oxide of the composition, or, if it solubilizes the refractory oxide to an extreme degree, the resulting solution must have a suitably high viscosity at the firing temperature, both at the initial firing stage and in the whole course of firing. However, the refractory oxide and pigment must not be dissolved in the glass in an arnount over 20 weight percent, and preferably not over 10 weight percent.

Similarly, the total amount of glass with respect to the refractory oxide and pigment is important. If glass having a density of 2 to 5 g/cm³ is used, the amount of glass is 30 to 60 vol. %, and preferably 40 to 50 vol. %, and the remainder is refractory oxide and pigment. As to the exact amount of glass, more glass is required when the viscosity of the glass at the firing temperature is relatively high, and less glass is needed when the viscosity of the glass is relatively low If the amount of glass is too small, the desired degree of densification of the layer will not be attained during firing, and if it is too large, the layer will become too soft at the firing temperature, so the shape of the barrier-rib will change and the desired electrode spacing and cell shape will not be preserved, and the glass will also ooze out into the conductor layer adjacent to the glass layer, creating problems of potential shorts and opens in the conductive circuits. Moreover, this flow of glass makes junction with the adjacent conductor exceedingly difficult. Too much glass leads to entrapment of organic matter, which can cause blisters in the insulator layer during the subsequent firing. On the other hand, if the amount of glass is less than 30 vol. %, the fired tape will be too porous and not sufficiently compact. When these changes are considered, the fired tape should contain amorphous and non-crystalline glass in an amount of 40 to 50 vol. %.

Furthermore, it is noted that, in order to dissipate the structural stresses induced during the thermal treatment between 350°C and 470°C due to the organic burnout and glass (especially type I) sintering, the top and bottom insulator layer should sinter simultaneously or in sequence, having the bottom layer sintered on the rigid substrate before the top layer does.

### REFRACTORY OXIDE AND PIGMENT

The refractory oxide and pigment used in the present invention, regardless of the type of glass with which it is used, is one that is insoluble in glass or, if soluble, has as little solubility as possible. When the assembly comprises multiple layers, it is important in terms of forming this multilayer system that the insulator layer have expansion characteristics equivalent to those of the substrate so as to achieve dimensional stability, especially with respect to substrate warping. Within this criterion, the refractory oxide and pigment are selected such that the thermal coefficient of expansion (TCE) of the mixture with glass will be close to the TCE of the substrate being used. Specifically, when the glass has a lower TCE than the refractory oxide with which it is used, such as Al₂O₃, a filler with a high TCE, such as α-quartz or CaZrO₃, is used along with the refractory oxide. Meanwhile, when glass with a high TCE is used, a filler with a low TCE, such as fused silica, cordierite, or mullite, should be used along with the refractory oxide.

In order to make the fired insulator layer, which is the green tape formed from the composite, even more compact, it is important chat the mixture of glass and refractory oxide have an extremely small particle diameter. In particular, independent particles should not exceed 15 µm, with 10 µm or less being preferable. It is preferable for essentially all of the inorganic solid particles to be between 0.2 and 5 µm.

Depending on the color requirement of the barrier-rib structure, various refractory pigments may be used. For example, a thin top layer of black color has been used to enhance color contrast. For that purpose, chromium oxides with various dopants such as cobalt, copper, iron, nickel, tin, manganese, or zinc, or cobalt oxide with iron or manganese may be used to generate black color that remains after firing. Each layer of the composition contains about 10 to 70 vol. % of refractory oxide ad 1 to 30 vol. % refractory pigment.

### INORGANIC OXIDIZING AGENT

The addition of an oxidizing agent to glass frit serves two functional purposes. The first is that preferred oxidizers form a liquid phase early in the thermal treatment of the formulated filler and frit mixtures intended to form barrier rib structures. This liquid phase acts to clean residual organic films from the frit and filler surfaces by penetrating the surface microstructure prior to the onset of frit sintering. The liquid form of the oxidizing agent typically undergoes a slow chemical decomposition, while releasing oxygen. This oxidizing liquid and gaseous atmosphere is responsible for the reactive chemical cleaning of ceramic surfaces of organic residue. This surface cleaning helps to prevent the possible entrapment of carbonaceous polymer decomposition products in the desired structures. Secondly the oxidizing compound provides a local atmosphere of stable oxidizing atmosphere for the proper flow and wetting of frits that may be susceptable to the effects of carbon and reducing atmosphere gases that can be present locally during organic binder removal. Discolored ceramic structures are possible, if insufficient oxygen is available, during sintering and microstructure development.

Suitable oxidizers include metal nitrate, chlorate and/or perchlorate compounds of alkali metals, lead, bismuth and other lower melting metal compounds which undergo a slow progressive thermal decomposition with the evolution of oxidizing gases. The preferred oxidizing compound is Pb(NO₃)₂. This compound has been found suitable when added to formulated powder mixtures using more than one method. One method used to promote uniformity of mixing of oxidizer and frit powder was tested by first milling crystalline Pb(NO₃)₂ to a dry powder in an alumina ceramic ball mill for a short period. The milled powder was sized by screening through 200 to 325 mesh screens. The resultant nitrate powder was then mixed at a 5% by weight addition to the desired frits and subsequently milled in a ceramic alumina mill for a short additional time period suitable to provide intimate mixing. In formulation, suitable oxidizer contents were provided by mixing oxidizer processed frit with untreated frit of the same composition and adjust to desired levels.

In other tests it was found that intimate mixing is not required for the oxidizer to be effective in the formulation. In these cases, the milled nitrate compound was added directly to the formulated frit filler mixtures with satisfactory oxidizer performance. Each layer of the composition contains about 0 to 10 vol. % oxidizing agent.

The use of oxidizing compounds as co-additives to frit containing formulations is known in the prior art. One such example of this prior art is illustrated by US 4,058,387 assigned to Owens-Illinois Inc.

### POLYMER

The above-mentioned inorganic powder of glass and refractory oxide are dispersed in a medium obtained by dissolving in a volatile organic solvent a binder composed of polymer(s), plasticizer(s), and an optional dissolution substance such as a parting agent, a dispersant, a peeling agent, an antifouling agent, a wetting agent, etc.

A wide range of polymers have been used in conventional methods for manufacturing green tape, which involves firing at a temperature high enough that the binder can be easily burned away in the air, can be used as the main component of the binder. Examples of this polymer substance include poly(vinylbutyral), poly(vinyl acetate), poly(vinyl alcohol), methyl cellulose, ethyl cellulose, hydroxyethyl cellulose, methyl hydroxyethyl cellulose, and other cellulose-based polymers, atactic polypropylene, polyethylene, poly(methylsiloxane), poly(alkylene carbonate) poly(methylphenylsiloxane), and other silicon-based polymers, polystyrene, butadiene/styrene copolymers, poly(vinylpyrrolidone), polyamide, high molecular weight polyether, a copolymer of ethylene oxide and propylene oxide, polyacrylamide, sodium polyacrylate, poly(lower alkyl acrylate), copolymers and multipolymers of various combinations of lower alkyl acrylates and methacrylates, and various other acrylic polymers. Copolymers of ethyl methacrylate and methyl acrylate, and terpolymers of ethyl methacrylate, methyl acrylate, and methacrylic acid have been used in the past as binders for slip molding substances.

It is also possible to use organic binders for use in a green tape composed of a miscible multipolymer mixture(s) of 0 to 100 wt. % of a C₁ to C₈ alkyl methacrylate, 0 to 100 wt. % of a C₁ to C₈ alkyl acrylate, and 0 to 5 wt. % of an ethylene-based unsaturated carboxylic acid or amine.

It is preferable to use a polymer of a monofunctional methacrylate expressed by the following structural formula (Chemical Formula 1) or a poly(α-methylstyrene) that will burnout extremely cleanly and not leave any carbonaceous residue in the insulator layer even at a low firing temperature of 470 to 650°C in an oxidizing atmosphere.

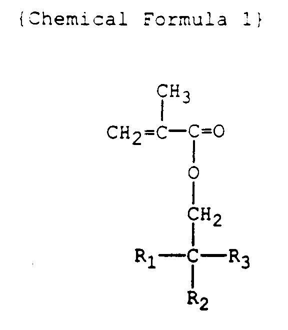

In the above-mentioned methacrylic monomer, the α-carbon must have two or three hydrogen atom substituents, depending on whether a β-carbon is present. If there is no β-carbon, this is replaced by hydrogen atoms, as in methyl methacrylate. If there is β-carbon, R₁, R₂, and R₃ should be independently selected from among alkyl, aryl, aralkyl groups, or, if one of the three R groups is a hydrogen atom, the other two should he selected from among alkyl, aryl, aralkyl groups.

These two types of polymer should be homopolymers, or, in the case of a methacrylate polymer, should he a polymer that has only monomers suitable to the above criteria.

These two types of polymers may contain additional types of comonomer in an amount of less than or equal to 15 wt. %, but preferably 5 wt. % or less. This addition provides improved non-oxidative combustion characteristics. Examples of the additional monomers include ethylenic unsaturated carboxylic acids and amines, acrylates, styrene, acrylonitrile, vinyl acetate, and acrylamide. Similarly, other polymers that do not meet the above criteria, such as homopolymers and copolymers of these other monomers, can also he used instead of the comonomers in a amount less than or equal to 15 wt. %. Regardless of whether these additions make up a separate polymer or are contained in the polymer chain of the principal component, it is permissible for them to be contained in the total polymer substance to the extent that they do not exceed approximately 15 wt. %, ad preferably 5 wt. %, of the total weight of the monomers present in the system.

Whichever polymer substance is used, its intrinsic viscosity measured at 20°C in methylene chloride at a concentration of 0.25 g polymer in 50 ml of methylene chloride should be at least 0.1 poise so that it will have adequate bonding strength. There are no particular restrictions on the upper limit to the molecular height, but the use of a polymer that has an intrinsic viscosity of 1.0 poise or less is preferable in terms of avoiding problems with solubility, and the use of a polymer that has an intrinsic viscosity of 0.3 to 0.6 poise produces particularly good results in the present invention. The binder comprises about 40 to 60 vol. % polymer.

### PLASTICIZER

At least one type of plasticizer that will contribute to lowering the glass transition point (Tg) of the polymer substance is used. The plasticizer helps to ensure the lamination of the composition to the substrate. It is preferred that the boiling points of the plasticizers be close to 300°C in order that they remain in the layer as the volatile solvent is driven off by heating. Nevertheless, it is further preferred that the volatility of the plasticizers be such that they can be removed from the system by simple heating if it is desired to reduce the amount of plasticizer.

With acrylic binder, for example, plasticizers can include dibutyl phthalate and other esters of aromatic acids; esters of aliphatic polyacids such as diisooctyl adipate, and nitrate esters; aromatic or aliphatic acid esters of glycol; polyoxyalkylene glycols, aliphatic polyols; alkyl and aryl phosphates; chlorinated paraffins; and sulfonamide types can be used.

In general, water insoluble plasticizers are advantageous for greater high humidity storage stability and environmental operating latitude, but not required. Suitable plasticizers include: glycol, triethylene glycol diacetate, triethylene glycol diproprionate, triethylene glycol dicaprylate, triethylene glycol dimethyl ether, triethylene glycol bis(2-ethylhexanoate), tetraethylene glycol diheptanoate, poly(ethylene glycol), poly(ethylene glycol)methyl ether, isopropyl naphthalene, diisopropyl naphthalene, poly(propylene glycol), glyceryl tributyrate, diethyl adipate, diethyl sebacate, dibutyl suberate, tributyl phosphate, tris(2-ethylhexyl)-phosphate, t-butylphenyl diphenyl phosphate, triacetin, dioctyl phthalate, tris(2-butoxyethyl)phosphate ad phosphates such as dicyclohexyl phthalate, dioctyl phthalate diphenyl phthalate, diundecyl phthalate, butyl benzyl phthalate, 2-ethylhexyl benzyl phthalate.

The use of a plasticizer that will cleanly volatilize along with a high molecular weight polymer and leave essentially no residue behind is particularly favorable. An example of such a plasticizer is benzylbutyl phthalate. The use of this compound allows the plasticity of the binder to be adjusted, the resulting green tape will be suited for lamination on the substrate with the conductor lines, and the green tape will not be too soft or too weak for handling.

The total amount of the binder, including the plasticizer contained therein, must be sufficient to obtain good lamination and high green tape strength, but must not significantly reduce the filling amount of the inorganic solid powder. If too much inorganic matter is contained in the green tape, sintering and compacting during firing will be inadequate. For this reason, the binder should account for 40 to 60 vol. %, and preferably 40 to 50 vol. %, of the volume of the green tape, not including the solvent. The level of plasticizer can also be modified to enhance the green tape adhesion to the cover sheet to prevent coating defects such as wrinkles, air pockets and premature delamination of cover sheet from the green tape.

### ORGANIC SOLVENT

An organic solvent is selected that will completely dissolve the polymer(s), plasticizer(s), and any additives that are added, and that have a high enough volatility to be evaporated readily by relatively low-level heating at atmospheric pressure and give the upper and lower insulator composition a viscosity of 1 to 25 pascal seconds. This solvent should have a boiling point that is lower than any of the other additives contained in the composition. Examples of such solvents include acetone, xylene, methanol, ethanol, isopropanol, methyl ethyl ketone, 1,1,1-trichloroethane, tetrachloroethylene, amyl acetate, 2,2,4-triethylpentaediol-1,3-monoisobutyrate, toluene, methylene chloride, and fluorocarbons. The individual components of the solvent need not be perfect solvents of the polymer substance, as long as they function as a solvent when mixed with the other solvent components.

The green tape of the present invention is a tape of the previously mentioned insulator composition, such insulator composition that has been coated onto a flexible substrate, such as a copper belt or a polymer film, to form a layer having a uniform thickness, and wherein the volatile organic solvent has been volatilized and removed from said layer by heating. The heating temperature is a temperature below the boiling point or decomposition point of the binder component. Too high of a temperature is undesirable because it causes blistering.

### SAND BLASTING PROCESS

The barrier-rib formation method of the present invention is based on sandblasting, and is characterized by the use of the above-mentioned green tape of the present invention.

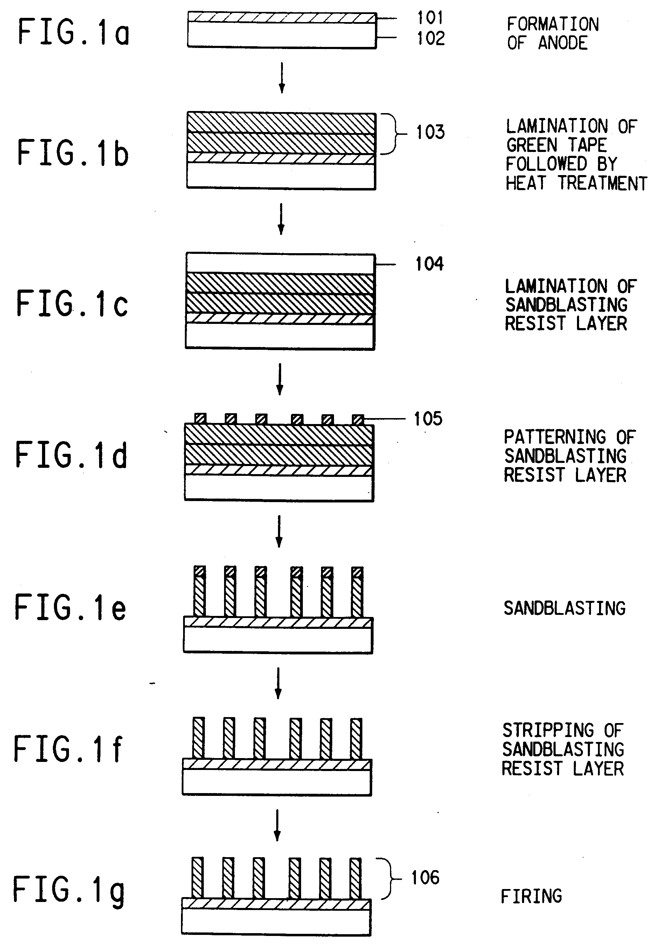

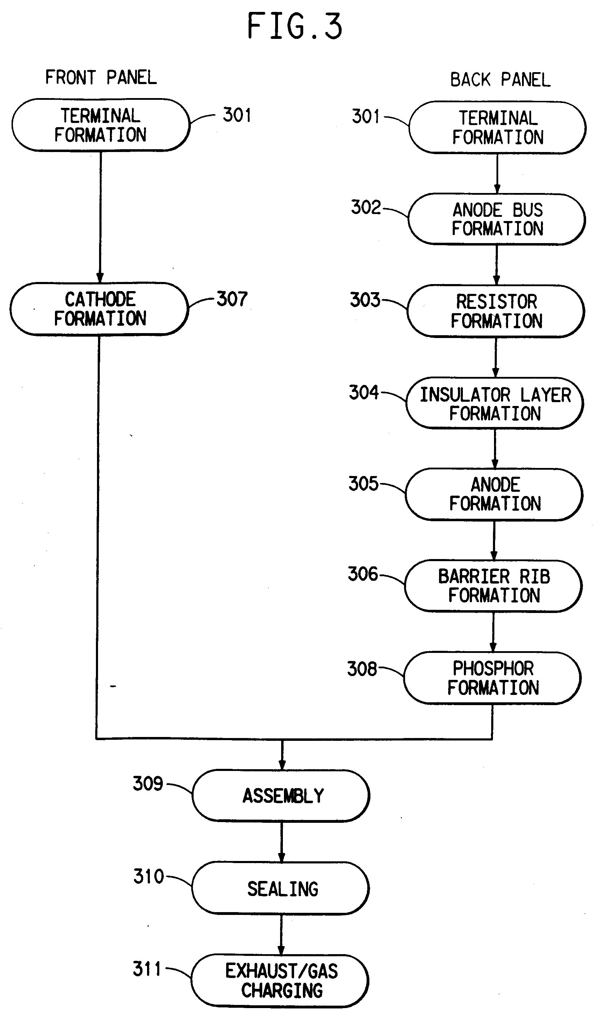

The present invention is presented in detail while refering to Figures 1 through 6, which illustrate a case in which a cathode or anode is formed on one of the pair of glass substrates, i.e., the front and back panels, that make up the PDP apparatus, and a barrier rib is formed on the glass substrate on which the anode has been formed (hereinafter referred to as "back panel"). The following refers to Figure 3.

(301): A terminal electrode used for external input is formed on the glass substrate.

(302): An anode bus is formed on the same substrate.

(303): A direct current control resistor group that is electrically connected with the anode bus formed in the previous step is formed on the same substrate (when a substrate with no resistance is used, this step is omitted).

(304): An insulator layer that electrically insulates the bus from the discharge space is formed on the anode formed in (302).

(305): An anode pad is formed at the opening in the insulator layer (304); the anode pad remains exposed to form a pair with the cathode (307) responsible for the voltage discharge.

(306): A barrier-rib that defines a discharge region (image cell) is formed using an insulator composition corresponding to the position of the resistor and anode formed up to the previous step. This barrier-rib formation step comprises the following steps (see Figure 1).
1a - An anode (101) is formed on a glass substrate (102).
1b - One layer of the composite green tape (103) of the present invention is laminated (the number of layers is selected from a range of one to three wherein the desirable green tape layer(s) is within the range of 100 to 300 µm) over the lower structure formed on the glass substrate. The structure on which an insulator layer has been formed is heated to between 350°C to 470°C to remove all of the organic substance and soften or melt glass I and/or part of glass II. The green tape layer is referred to as the insulator layer. Depending upon the specification of resultant barrier-rib structure, the bottom layer(s) may have different insulator compositions from the top layer. For example, the bottom layer may contain alumina as the only refractory oxide and the top layer may contain alumina and cobalt iron oxide to produce a black color at the top of the barrier-rib.
1c - A photoimageable sandblasting resist which may be ceramic or non-ceramic and may be a paste or a tape (104) is applied to the uppermost portion of the insulator layer.
1d - A resist pattern (105) is formed corresponding to the region in which the insulator layer is to be left behind by sandblast etching. 1e - An abrasive material and air are sprayed simultaneously from the nozzle(s) of a sandblasting machine from above the sandblasting resist layer, the abrasive material collides with and cuts into the insulator layer in the region where no resist layer has been formed and a barrier-rib is left behind after sandblasting defines the image cell or channel of a PDP apparatus.
1f - The sandblasting resist layer is stripped away.
1g - The barrier-rib thus formed is fired (106).

Any common firing furnace used in the field of ordinary thick film hybrid ICs can be used for the firing. Typical firing conditions involve keeping the structure at a temperature of about 470 to 650°C for approximately 5 to 20 minutes under suitable air flow and exhaust conditions. There is a close correlation between the firing temperature conditions and the thermal characteristics of the amorphous glass and refractory oxide in the insulator composition of the green tape, and the firing conditions should be modified according to the material being used in order to obtain good barrier-rib performance. Depending on the firing conditions, part of the amorphous glass in the insulator composition may crystallize as well.

The temperature elevation rate until the peak temperature is reached should be about 10 to 50°C per minute, but near the pyrolysis temperature of the organic component present in the green tape, the temperature elevation rate should be sharply decreased to avoid abrupt firing, after which the temperature should again be raised at a rate that takes into account productivity, sinterability, etc. This allows the incineration of the organic matter in the green tape to be accomplished smoothly and more completely.

Returning to Figure 3 (306): The back panel constructed in the steps as shown in Figure 1 is superposed at a specific position on a front panel on which a cathode has been formed (307), thereby assembling a pair a glass substrates (309) in which a phosphor layer (308) to generate green, blue or red color is deposited on the inner surface of the image cells.

(310): The edges of the assembly in which a pair of glass substrates are arranged opposite to each other are sealed using a low melting point glass composition, for example, and fired at a low temperature.

(311): A discharge gas is charged into the cell that was sealed airtight creating a gas discharge section.

A PDP apparatus-cell can be manufactured by following the above.

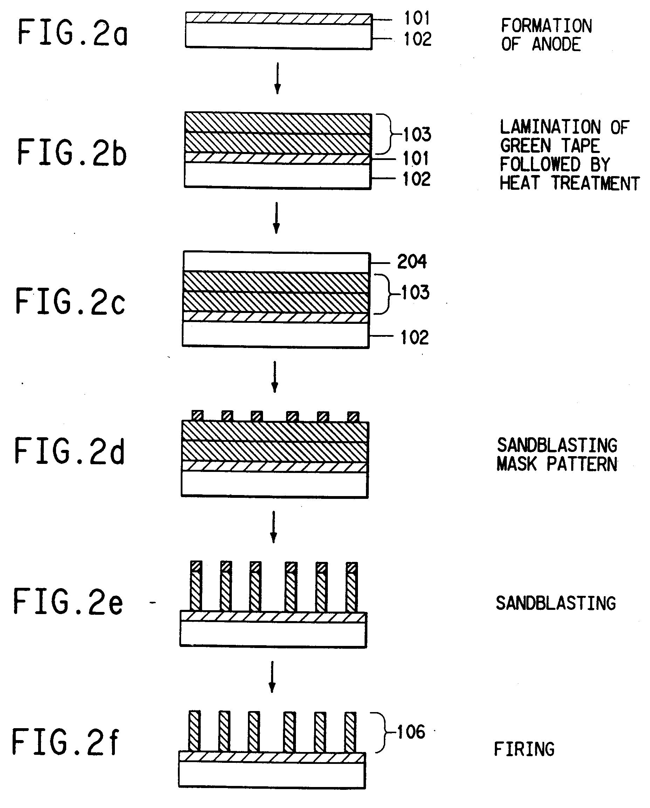

In the above mentioned first method for forming a barrier rib for a PDP apparatus (see Figures 1 and 5), a sandblasting resist is applied to the uppermost portion of a laminate of a "composite" green tape, but instead of using this resist (which has to be stripped before post firing), an alternative sand blasting resist can be used that contains a photopolymer, monomer, s photopolymerization initiator. a relatively large amount of resin component which provides resistance to sandblasting. Moreover, it also contains a high amount of glass and/or ceramic particles which will sinter during post firing. Therefore, this resist does not have to be stripped (Figure 2). Since the top layer of the "composite" green tape provides the needed color contrast (black), the above resist may be optically clear or dark (e.g. black) after post firing. Because a reasonably thick photoresist (1.5-3 mil) has greater resistance to the sand blasting force, it is beneficial to use a thick un-pigmented photoresist because it permits deeper UV penetration needed to photo-pattern the sand blast resist. A pigmented photoresist, on the other hand, has a shallower UV penetration due to the blockage and/or absorption of UV by the heavy metal normally found in the pigment(s). Applying the above inorganic containing photoresist permits a rib formation method devoid of the photoresist stripping step and further enhance the mass production efficiency.

With the method of the present invention for forming a barrier-rib for a PDP apparatus, the use of the green tape which originates in the insulator composition of the present invention, not only results in thickness uniformity of the barrier-rib, but also simplifies the process and shortens the work time, and particularly improves the efficiency and process management of the sandblasting step. Therefore, the use of the insulator composition or green tape of the present invention, or of the barrier-rib formation method of the present invention, makes it possible to increase throughout in mass production and further increasing the size of the PDP apparatus at fine pitch.

One advantage of using insulator green tape including the "composite" type in this invention is the structural strength and chemical resistance of the laminate after first thermal treatment between 350°C and 470°C. The partially sintered (the melted glass I became the inorganic binder) and nearly 100% inorganic film provides the needed strength for narrow rib and fine pitch needed for high definition display applications. Such an inorganic film also provides chemical resistance in normally a base type stripper solution to remove the photoresist after sand blasting. On the contrary, the structural strength of a multiple layer of screen printed or die coated thick film composition solely depends on the polymer binder which may not survive the sand blasting force when the rib width and pitch become finer and finer. Moreover, the polymer binder in the above thick film composition may not provide sufficient resistance to the photoresist stripping solution.

### MICROSTRUCTURAL EVOLUTION OF THE COMPOSITE GREED TAPE COMPOSITIONS

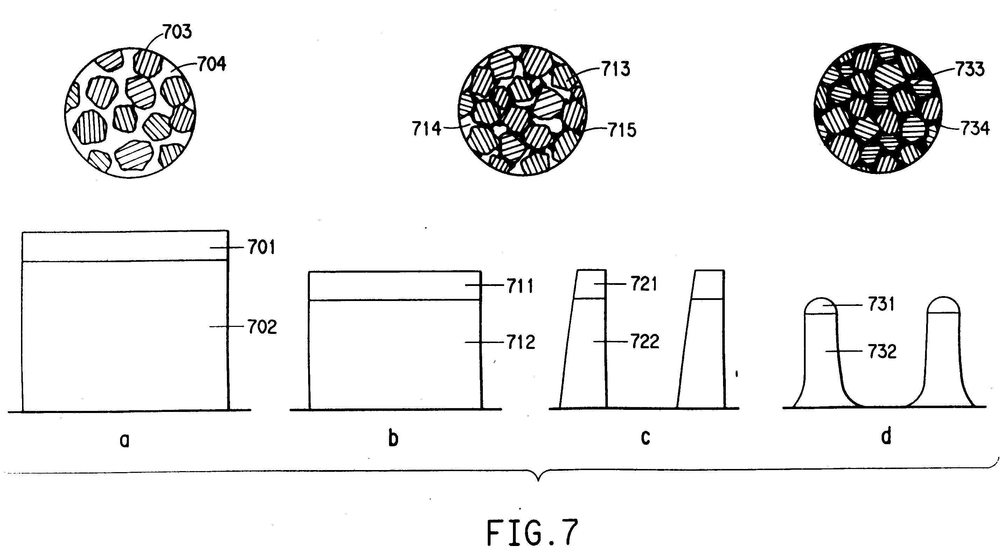

Figure 7 illustrates the microstructural evolution of composite green tape compositions from as-coated laminate a, as thermal treated laminate b, as sand blasted and photoresist stripped barrier rib c, to as post fired barrier rib d. The composite green tape is consisted of a thin pigmented (i.e., black colored) insulator layer (701, 711, 721, and 731) and a thicker un-pigmented (i.e., white) insulator layer (702, 712, 722, and 732). Associating models of the microstructure are shown at the top of the schematic cross section for each stage.
a - Inorganic solids (703) consisting of glasses, refractory oxides, inorganic oxidizing agents, and/or refractory pigments are dispersed in an organic matrix (704) which is consisted of polymers, plasticizers and/or trace amount of residual organic solvent(s).
b - After thermal treatment between 350°C ad 470°C, the organic substances are nearly completely burnout, the glass I melted to provide the inorganic joints (715) among the remained inorganic solids (713). The partial densification expelled a significant fraction of porosity left by the burnout organic. Part of the porosity (714) was retained in the resulting "non-powdery and mechanically weak" microstructure which leads to a sand blasting rate equivalent to a multiple layers of sand blastable dried thick film.
c - The barrier rib microstructure is identical to step b because sad blasting is a mechanical ablation which does not alter the microstructure, despite changing the shape from an un-patterned insulator film to a desirable barrier rib.
d - More glass sintering occurred during the post fiting of the barrier rib to further densify the microstructure and expel the porosity. The inorganic solids (733) are shown dispersed in a glass matrix (734).

### EXAMPLES

The present invention will be described in further detail by giving practical examples. The scope of the present invention, however, is not limited in any way by these practical examples.

### EXAMPLES 1-3

### 1) PREPARATION OF THE UPPER AND LOWER LAYER COMPOSITIONS OF THE COMPOSITE

The upper and lower layer compositions of the composite were prepared by ball milling the fine inorganic powders and binders,in a volatile organic solvent with the compositions shown in Table 1.

To optimize lamination, patternability, burnout properties, and fired structure integrity, the following volume relationship have been found to be advantageous. They will be converted into weight percentages to illustrate typical compositions. The inorganic phase will be assumed to have a specific gravity of 4.5 and the vehicle will be assumed to have a specific density of 1.1.

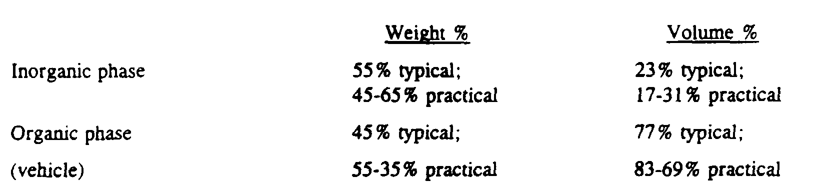

Since the tape is usually coated from slip (see examples), the recipe for the slip must include solvent sufficient to lower the viscosity of the coatable slip to under 10,000 centipoise; typical viscosity ranges are 2,000 to 7,000 centipoise. A typical slip has two to four weeks storage stability before coating. Due to the high viscosity of the coated tape, they are usually stable once coated.

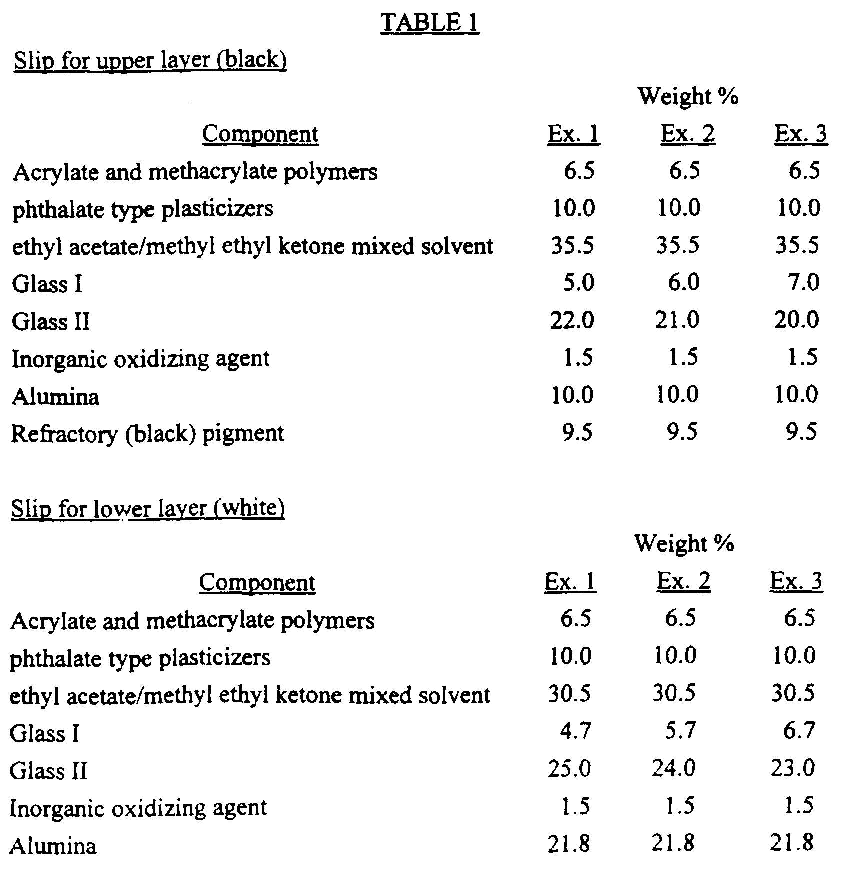

Compatible upper and lower layer compositions in Table 1 are listed following the same example number. This is to provide a sintering sequence to properly release the associated structural stresses and make crack-free insulator film.

The glass 1 in the above table and Examples 1, 2, and 3 had the following weight percent compositions.

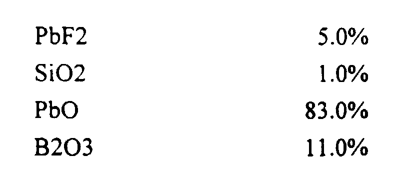

The glass II in the above table and Examples 1, 2, and 3 had the following weight compositions.

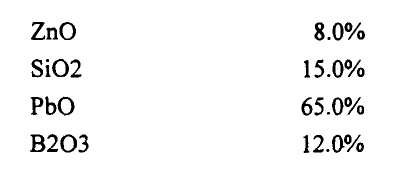

The fine inorganic powders having the following specific surface areas were used.

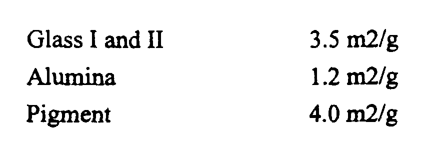

### Preparation of Composite Green tape

An insulator composite composition of the upper layer prepared as set forth in Example 1, 2, or 3 above was coated over a polyester film with a thickness of 3 mils that had undergone a silicon treatment (trade name: MYLAR®, made by E.I. du Pont de Nemours and Company) such that the thickness of the composition when wet was 4-5 mils, and this product was then dried at 60°C to 110°C for 7 to 10 minutes to evaporate 99.5 to 99.9 wt.% of the volatile organic solvents, which yield a green tape thickness of 1.5-1.7 mils. A plain polyester film with a thickness of 1 mil (trade name: MYLAR®, made by E. I. du Pont de Nemours ad Company) was laminated to the coated green tape before its being wound up. A second insulator composition, of the lower layer, prepared as set forth in Example 1, 2, or 3 was then coated with a wet thickness of 18-20 mils, and dried at 60°C to 110°C for 10 to 20 minutes to evaporate 99.5 to 99.9 wt.% of the volatile organic solvents, which yielded a green tape thickness of 8.0-8.2 mils. The upper layer's 3-mil MYLAR® support was then removed and the upper layer green tape and the 1 mil MYLAR® was laminated to the coated lower layer green tape to form the composite structure before wounding up for slitting to any desirable width and length.

### Formation of Barrier Rib

Using the composite green tape prepared above and the method described in Figure 1 or 2, specifically a 400°C to 450°C thermal treatment, nearly 100% of the organic (polymer binders and plasticizers) remained in the as coated tape were removed and a barrier rib was formed on a glass substrate after sand blasting.

The dimensions of the as coated composite green tape, the sand blasted barrier rib and the post fired barrier rib are given below.

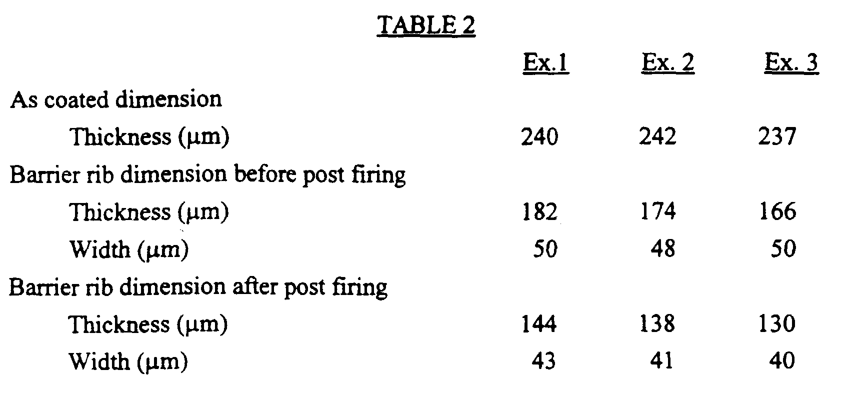

In the table, the values for the barrier rib dimension are averages of values obtained by measuring 20 points at random.

Barrier ribs made by the composite green tape with its pigmented (black) top layer has enhanced color contrast and prevented the reflection of external light for individual color cells or channels.

### EXAMPLES 4-6

### Preparation of Insulator Composition

Upper and lower Insulator compositions were separately prepared by ball milling the fine inorganic powders, polymer binders, and plasticizers in a organic solvent mixture with the compositions shown in Table 3.

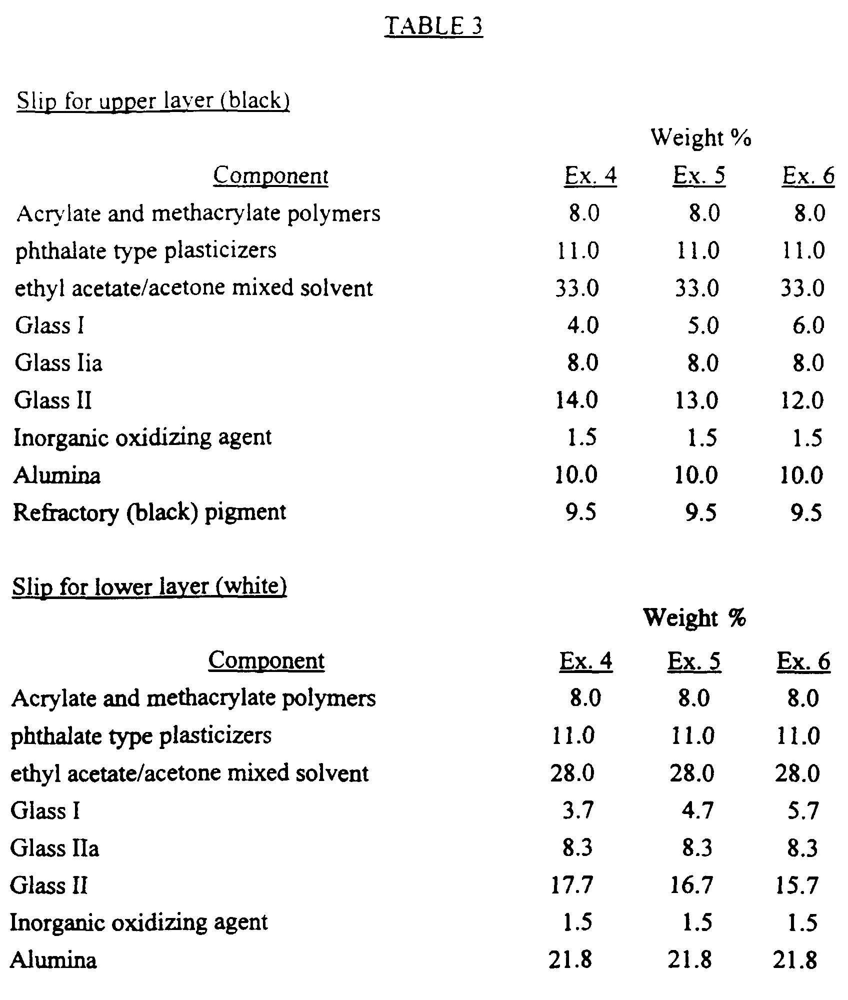

Compatible upper and lower layer compositions in Table 3 are listed following the same example number. This is to provide a sintering sequence to properly release the associated structural stresses ad make crack-free insulator film.

The glass I ad II in the above table and Examples 4, 5, ad 6 are identical to what were used in Examples 1, 2, and 3. The glass IIa had the following weight percent compositions. Surface area of glass IIa is similar to Glass I ad Glass II.

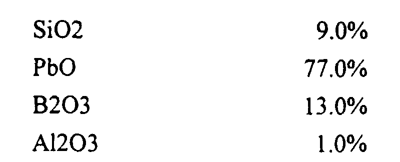

Composite green tape and subsequently barrier rib was prepared as described in Examples 1, 2, and 3. Table 4 summarizes the related dimensions. Thickness of the upper black or lower white layer of the green tape is 40 µm or 200 µm respectively.

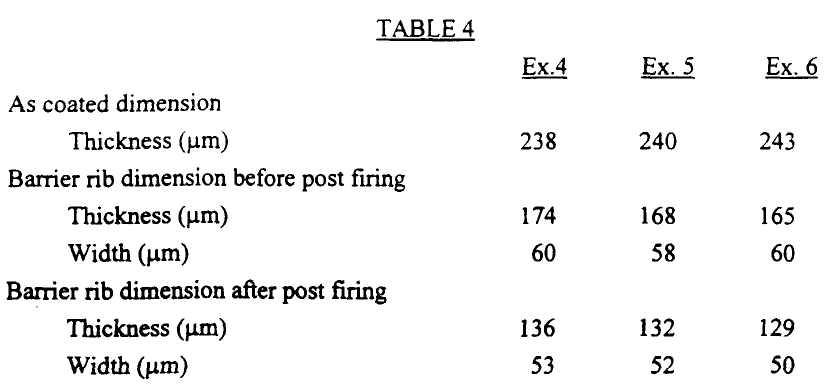

In the table, the values for the barrier rib dimension are averages of values obtained by measuring 20 points at random.

### EXAMPLES 7-9

Coating the Table 1 upper layer compositions Examples 1, 2 and 3 to produce three pigmented (black) green tape 7B, 8B, 9B; and Table 1 lower layer compositions Examples 1, 2, and 3 to produce three unpigmented (white) green tape 7W, 8W, 9W respectively. The black or white green tape thickness is 40 µm or 200 µm respectively.

The separate green tape was then laminated to the substrate according to the arrangement described in Table 5, noting that the lower layer was laminated first.

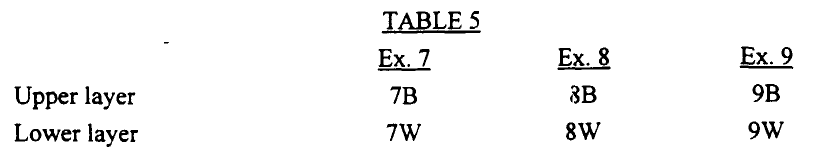

The barrier rib was prepared as described in Examples 1, 2, ad 3 and the related dimensions are summarized in Table 6.

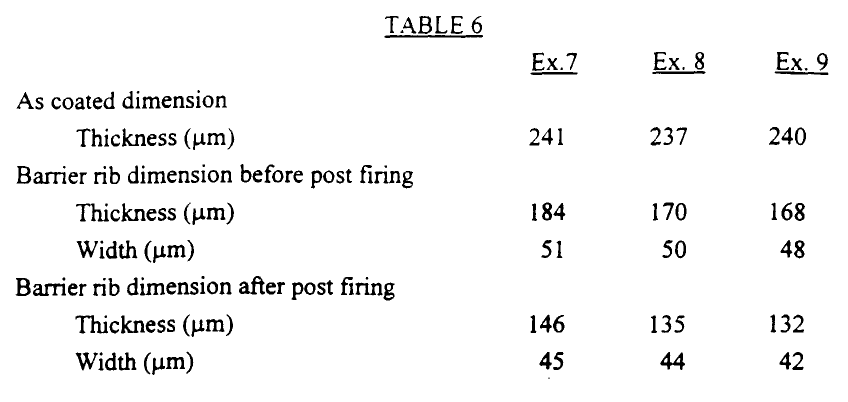

In the table, the values for the barrier rib dimension are averages of values obtained by measuring 20 points at random.

## Claims

1. A composite for use in a green tape suitable for barrier rib construction in a plasma display apparatus comprising:
(a) an upper layer and a lower layer composition each comprising:
(i) 1 to 30 vol.% of a non-crystallizable first glass;
(ii) 10 to 40 vol.% of a non-crystallizable second glass;
(iii) 10 to 70 vol. % of a refractory oxide;
(iv) 0 to 10 vol. % inorganic oxidizing agent; and with a further requirement:
(v) that the upper layer contains 1 to 30 vol.% refractory pigment ad the lower layer contains 0 to 30 vol. % refractory pigment; and
wherein (i) the second glass has a deformation temperature at least 50°C lower than the firing temperature for the composite; (ii) the first glass has a deformation temperature at least 50°C lower than the deformation temperature of the second glass; wherein the first and the second glasses have a viscosity of 1 x 10⁵ poise or less at a firing temperature in the rage of 470°C to 650°C for the composite; and
with the proviso that the combined amount of the first and second glasses are at least 30 vol. % of the total volume of the upper and lower layers;
(b) a binder comprising 40 to 60 vol. % polymer and 60 to 40 vol. % plasticizer,
(c) volatile organic solvent; and
with the further proviso that the compositions of the upper ad lower layer are not the same.

2. A green tape used in the formation of a barrier-rib for a plasma display apparatus, comprising:
(a) a upper layer ad a lower layer composition wherein the lower layer is coated over a flexible substrate and each layer comprises:
(i) 1 to 30 vol. % of a non-crystallizable first glass;
(ii) 10 to 40 vol. % of a non-crystallizable second glass;
(iii) 10 to 70 vol. % of a refractory oxide;
(iv) 0 to 10 vol. % inorganic oxidizing agent; and with a further requirement:
(v) that the upper layer contains 1 to 30 vol.% refractory pigment and the lower layer contains 0 to 30 vol.% refractory pigment; and
wherein (i) the second glass has a deformation temperature at least 50°C lower than the firing temperature for the composite; (ii) the first glass has a deformation temperature at least 50°C lower than the deformation temperature of the second glass; wherein the first and the second glasses have a viscosity of 1 x 10⁵ poise or less at a firing temperature in the rage of 470°C to 650°C for the composite; and
with the proviso that the combined amount of the first and second glasses are at least 30 vol. % of the total volume of the upper and lower layers;
(b) a binder comprising 40 to 60 vol.% polymer and 60 to 40 vol.% plasticizer; and
with the further proviso that the compositions of the upper and lower layer are not the same.

3. The composite of Claim 1 wherein at least one of the first glasses consists of at least two or more glasses.

4. The green tape of Claim 2 wherein at least one of the first glasses consists of at least two or more glasses.

5. The composite of Claim 1 wherein at least one of the second glasses consists of at least two or more glasses.

6. The green tape of Claim 2 wherein at least one of the second glasses consists of at least two or more glasses.

7. The green tape of Claim 2 wherein a additional flexible substrate is laminated on the exposed green tape.

8. A method for forming a plasma display barrier rib whose edges are sealed with a sealing material ad which is equipped with (i) a pair of substrates which are positioned facing each other a specific distance apart, wherein a plurality of electrodes that make up a discharge light emitting display are provides to the surface of at least one of the substrates, and (ii) a barrier rib that divides said discharge light emitting display, comprising
a) at least one layer of the green tape of Claim 2 devoid the flexible substrate is laminated over the surface of an assembly on which a electrode pattern layer of a conductor composition has been formed on a glass substrate and is heated within the range of 350° to 470°C form a insulator in which nearly all of the organic matter in the layer has been removed, the non-crystallizable first glass was also softened and melted to form an inorganic binder within the insulator layer.
b) a photoresist layer for use in sand blasting is formed on the insulator layer obtained in step a) and a resist pattern corresponding to the barrier rib is formed in the region that will not be etched by sand blasting,
c) a barrier rib structure component is formed by sand blasting away the insulator layer in the region with no resist pattern formed in step b), and
d) the formed barrier rib by the insulator layer patterned in step c) is post fired after the resist layer has been stripped off.

9. The method of Claim 8, step b wherein the photoresist layer is a ceramic containing photoresist paste layer.

10. The method of Claim 8, step b wherein the photoresist layer is a non-ceramic photoresist paste layer.

11. The method of Claim 8, step b wherein the photoresist layer is a ceramic containing photoresist green tape layer.

12. The method of Claim 8, step b wherein the photoresist layer is a non-ceramic photoresist green tape layer.
